# EUROPEAN PATENT APPLICATION

(11) **EP 4 583 363 A1**
(43) Date of publication of application: **09.07.2025**
(21) Application number: 23885997.9
(22) Date of filing: 13.09.2023
(51) Int. Cl.: H02J 50/10, H02J 7/00

(54) **WIRELESS POWER RECEIVING DEVICE AND OPERATION METHOD THEREFOR**

(30) Priority: 04.11.2022 KR 20220145750
(71) Applicant: Samsung Electronics Co., Ltd., Suwon-si, Gyeonggi-do 16677 (KR)
(72) Inventor: BYUN, Kangho, Suwon-si, Gyeonggi-do 16677 (KR); GU, Beomwoo, Suwon-si, Gyeonggi-do 16677 (KR); SHIN, Jaesun, Suwon-si, Gyeonggi-do 16677 (KR); YEO, Sungku, Suwon-si, Gyeonggi-do 16677 (KR); LEE, Jeongman, Suwon-si, Gyeonggi-do 16677 (KR); HAN, Hyoseok, Suwon-si, Gyeonggi-do 16677 (KR)
(74) Representative: Arnold & Siedsma
(86) International application number: PCT/KR2023/013741
(87) International publication number: WO 2024/096300

(57) **Abstract**

According to embodiments, a wireless power receiving device may comprise a receiving coil, a rectifier, a converter, a battery, and a controller. The controller may be set to control the converter such that an input voltage provided from the rectifier to the converter is maintained at a first reference voltage. The controller may be set to change a reference voltage of the input voltage from the first reference voltage to a second reference voltage, on the basis of an output current provided from the converter to the battery being maintained lower than a specified target current for a specified period of time while the input voltage is maintained at the first reference voltage.

## Description

### [Technical Field]

Various embodiments of the disclosure relate to a wireless power reception device and an operation method thereof.

### [Background Art]

Wireless charging technology adopts wireless power transmission/reception. For example, wireless charging may automatically charge the battery of a mobile phone by simply placing the mobile phone on a wireless power transmission device (e.g., a charging pad) without connection via a separate charging connector. Wireless communication technology eliminates the need for a connector for supplying power to electronics, thus providing enhanced waterproofing, and also requires no wired charger to thus provide better portability.

As wireless charging technology develops, there is ongoing research for methods for charging other various electronic devices (wireless power reception device) by supplying power to the other electronic devices by an electronic device (wireless power transmission device). For example, wireless charging comes in a few different types, such as electromagnetic induction using a coil, resonance, and radio frequency (RF)/microwave radiation that converts electrical energy into microwaves and transfers the microwaves.

For example, wireless charging techniques using electromagnetic induction or resonance are recently being widely adopted for electronic devices, such as smartphones. For example, if a power transmitting unit (PTU) (e.g., a wireless power transmission device) and a power receiving unit (PRU) (e.g., a smartphone or a wearable electronic device) come in contact or close to each other within a predetermined distance, power may be transferred to the power receiving unit by an electromagnetic induction or electromagnetic resonance method between the transmission coil or resonator of the power transmitting unit and the reception coil or resonator of the power receiving unit, and the battery included in the power receiving unit may be charged with the transferred power.

In the case of wireless charging, the optimal reception impedance of the wireless power reception device may change depending on changes in the coupling coefficient between the wireless power transmission device and the wireless power reception device.

### [Detailed Description of the Invention]

### [Technical Solution]

According to embodiments, a wireless power reception device may comprise a reception coil, a rectifier, a converter, a battery, and a controller. The controller may be configured to control the converter to maintain an input voltage provided from the rectifier to the converter as a first reference voltage. The controller may be configured to change a reference voltage of the input voltage from the first reference voltage to a second reference voltage based on maintaining a state in which an output current provided from the converter to the battery is lower than a designated target current for a designated period in a state in which the input voltage is maintained as the first reference voltage.

According to embodiments, a method for an operation of a wireless power reception device may comprise wirelessly receiving power through a reception coil of the wireless power reception device from an outside. The method may comprise rectifying the power received through the reception coil using a rectifier of the wireless power reception device. The method may comprise controlling a converter of the wireless power reception device to maintain an input voltage provided from the rectifier to the converter as a first reference voltage. The method may comprise changing a reference voltage of the input voltage from the first reference voltage to a second reference voltage based on maintaining a state in which an output current provided from the converter to a battery of the wireless power reception device is lower than a designated target current for a designated period in a state in which the input voltage is maintained as the first reference voltage.

According to embodiments, in a computer-readable recording medium storing instructions configured to perform at least one operation by a controller of a wireless power reception device, the at least one operation may comprise wirelessly receiving power through a reception coil of the wireless power reception device from an outside. The at least one operation may comprise rectifying the power received through the reception coil using a rectifier of the wireless power reception device. The at least one operation may comprise controlling a converter of the wireless power reception device to maintain an input voltage provided from the rectifier to the converter as a first reference voltage. The at least one operation may comprise changing a reference voltage of the input voltage from the first reference voltage to a second reference voltage based on maintaining a state in which an output current provided from the converter to a battery of the wireless power reception device is lower than a designated target current for a designated period in a state in which the input voltage is maintained as the first reference voltage.

### [Brief Description of the Drawings]

FIG. 1 is a block diagram illustrating a wireless power transmission device and a wireless power reception device according to an embodiment;
FIG. 2 is a block diagram illustrating a wireless power reception device according to an embodiment;
FIG. 3 is a block diagram illustrating a wireless power reception device according to an embodiment;
FIG. 4 is a block diagram illustrating a wireless power reception device according to an embodiment;
FIG. 5 is a flowchart illustrating an operation method of a wireless power reception device according to an embodiment;
FIG. 6 is a flowchart illustrating an operation method of a wireless power reception device according to an embodiment;
FIG. 7 is a flowchart illustrating an operation method of a wireless power reception device according to an embodiment; and
FIG. 8 is a flowchart illustrating an operation method of a wireless power reception device according to an embodiment.

### [Mode for Carrying out the Invention]

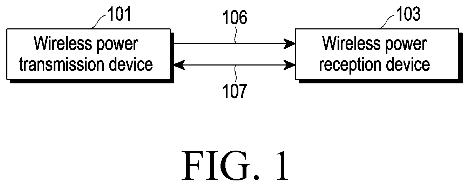

FIG. 1 is a block diagram illustrating a wireless power transmission device and a wireless power reception device according to an embodiment.

Referring to FIG. 1, a wireless power transmission device 101 according to an embodiment may wirelessly transmit power 106 to a wireless power reception device 103. Or, the wireless power transmission device 101 may receive information 107 from the wireless power reception device 103. For example, the wireless power transmission device 101 may transmit power 106 as per an induction scheme. Adopting the induction scheme, the wireless power transmission device 101 may include at least one of, e.g., a power source, a DC-DC conversion circuit (e.g., DC/DC converter), DC-AC conversion circuit (e.g., inverter), an amplifying circuit, an impedance matching circuit, at least one capacitor, at least one coil, or a communication modulation circuit. The at least one capacitor together with the at least one coil may constitute a resonance circuit. The wireless power transmission device 101 may implement at least part of the schemes defined in the wireless power consortium (WPC) Qi standard. The wireless power transmission device 101 may include a coil that is capable of produce a magnetic field when letting an electric current flow thereacross by an induction scheme. The operation of the wireless power transmission device 101 producing an induced magnetic field may be represented as the wireless power transmission device 101 wirelessly transmitting the power 106. For example, the wireless power transmission device 101 may transmit power 106 as per a resonance scheme. Adopting the resonance scheme, the wireless power transmission device 101 may include, e.g., a power source, a DC-AC converting circuit, an amplifying circuit, an impedance matching circuit, at least one capacitor, at least one coil, and an out-of-band short-range communication module (e.g., a Bluetooth low energy (BLE) short-range communication module). The at least one capacitor and the at least one coil may constitute a resonance circuit. The wireless power transmission device 101 may be implemented in a scheme defined in the alliance for wireless power (A4WP) standards (or air fuel alliance (AFA) standards). The wireless power transmission device 101 may include a coil that may generate a time-varying magnetic field which varies in magnitude over time if an AC current flows according to a resonance scheme or induction scheme. The process of the wireless power transmission device 101 producing a magnetic field may be represented as the wireless power transmission device 101 outputting or wirelessly transmitting the power 106. Further, an induced electromotive force (or current, voltage, and/or power) may be generated by the magnetic field generated around the coil of the wireless power reception device 103 according to a resonance scheme or an induction scheme. The process of producing an induced electromotive force through the coil may be represented as the 'wireless power reception device 103 wirelessly receives the power 106.'

The wireless power transmission device 101 according to an embodiment may communicate with the wireless power reception device 103. For example, the wireless power transmission device 101 may communicate with the wireless power reception device 103 according to an in-band scheme. The wireless power transmission device 101 or the wireless power reception device 103 may vary the load (or load impedance) on the data to be transmitted, according to, e.g., an on/off keying modulation scheme. The wireless power transmission device 101 or the wireless power reception device 103 may determine data transmitted from its opposite device by measuring a variation in load (or a variation in load impedance) based on a variation in the current, voltage, or power across the coil. For example, the wireless power transmission device 101 may communicate with the wireless power reception device 103 as per an out-of-band scheme. The wireless power transmission device 101 or the wireless power reception device 103 may communicate data using a short-range communication circuit (e.g., a BLE communication module, a Wi-Fi communication module, or a ZigBee communication module) provided separately from the coil or patch antennas. The frequency bands of wireless power and short-range communication module are separated from each other. For example, for the AirFuel standard, the frequency band of wireless power is 6.78MHz and the frequency band of the short-range communication module is 2.4GHZ.

**In** the disclosure, that the wireless power transmission device 101 or the wireless power reception device 103 performs a specific operation may mean that various pieces of hardware included in the wireless power transmission device 101 or the wireless power reception device 103, e.g., a controller (e.g., a micro-controlling unit (MCU), a field programmable gate array (FPGA), an application specific integrated circuit (ASIC), a microprocessor, or an application processor (AP)) performs the specific operation. Or, that the wireless power transmission device 101 or the wireless power reception device 103 performs a specific operation may also mean that the controller controls another hardware device to perform the specific operation. That the wireless power transmission device 101 or the wireless power reception device 103 performs a specific operation may mean that the controller or another hardware device triggers the specific operation as an instruction for performing the specific operation, which is stored in a storage circuit (e.g., memory) of the wireless power transmission device 101 or the wireless power reception device 195, is executed.

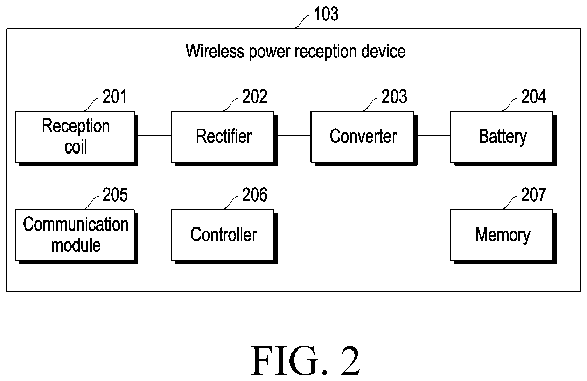

FIG. 2 is a block diagram illustrating a wireless power reception device according to an embodiment.

Referring to FIG. 2, the wireless power reception device 103 may include at least one of a reception coil 201, a rectifier 202, a converter 203, a battery 204, a communication module 205, a controller 206, or memory 207.

The controller 206 may be a micro controlling unit (MCU), a field programmable gate array (FPGA), an application specific integrated circuit (ASIC), a micro-processor, or an application processor (AP). The operation of the wireless power reception device 103 may be controlled by the controller 206. The operation of the wireless power reception device 103 may be understood as the operation of the controller 206.

The reception coil 201 may be connected to the rectifier 202. The reception coil 201 together with a capacitor may form a resonance circuit. The reception coil 201 may form a magnetic field based on the applied AC power. As the magnetic field passing through the cross section of the reception coil 201 changes over time, an induced electromotive force (e.g., current, voltage, or power) may be induced in the reception coil 201. The rectifier 202 may output DC power according to the induced electromotive force induced in the reception coil 201.

The rectifier 202 may be an AC-DC conversion circuit. For example, the rectifier 202 may be configured to perform an AC/DC power conversion operation. The rectifier 202 may be connected to the converter 203. There is no limitation on the implementation method of the rectifier 202. For example, the rectifier 202 may include a plurality of switches (e.g., a first switch, a second switch, a third switch, and a fourth switch) constituting a full bridge circuit. For example, the rectifier 202 may include a plurality of switches (e.g., a fifth switch and a sixth switch) and a plurality of diodes (e.g., a first diode and a second diode) constituting a half-bridge circuit. For example, the rectifier 202 may include a plurality of diodes (e.g., a third diode, a fourth diode, a fifth diode, and a sixth diode). For example, when the rectifier 202 includes a plurality ofswitches (e.g., first switch, second switch, third switch, and fourth switch) that constitute a full bridge circuit, one end of the resonance circuit including the reception coil 201 and the capacitor may be connected to a connection point between the switches (e.g., first switch, second switch), and the other end of the resonance circuit may be connected to a connection point between the switches (e.g., third switch, fourth switch). The rectifier 202 may convert AC power received through the reception coil 201 into DC power. The controller 206 may control on/off states of the plurality of switches (e.g., the first switch, the second switch, the third switch, and the fourth switch) so that AC power may be converted into DC power. The "input power" may be power provided from the rectifier 202 to the converter 203. The "input voltage" may be a voltage (e.g., V_{rect}) provided from the rectifier 202 to the converter 203. The "input current" may be a current (e.g., I_{rect}) provided from the rectifier 202 to the converter 203. The wireless power reception device 103 (e.g., the controller 206) may identify the input power (e.g., the input voltage V_{rect} or input current I_{rect}) provided from the rectifier 202 to the converter 203.

The converter 203 may be a DC-DC conversion circuit. For example, the converter 203 may be configured to perform a DC/DC power conversion operation. The converter 203 may perform converting (e.g., buck converting and/or boost converting) and/or regulating of the voltage of the rectified power provided from the rectifier 202. There is no limitation on the implementation method of the converter 203. The converter 203 may operate as a charger for charging the battery 204. The converter 203 may include a charger for charging the battery 204. The converter 203 may be connected to the battery 204. The converter 203 may be implemented as a power management integrated chip (PMIC) according to the implementation. When charging the battery 204, the converter 203 (e.g., the charger included in the converter 203) may adjust at least one of the voltage of the input current and the current to be suitable for charging the battery 204. The "output power" may be power provided from the converter 203 to the battery 204. The "output voltage" may be a voltage (e.g., V_{batt}) provided from the converter 203 to the battery 204. The "output current" may be a current (e.g., I_{batt}) provided from the converter 203 to the battery 204. The wireless power reception device 103 (e.g., the controller 206) may identify the output power (e.g., the output voltage V_{batt} or output current I_{batt}) provided from the converter 203 to the battery 204. The converter 203 (e.g., the charger included in the converter 203) may control a voltage and/or current for charging the battery 204 according to a charging mode (e.g., a constant current (CC) mode, a constant voltage (CV) mode, or a quick charging mode) of the battery 204. For example, when charging the battery 204 in the constant current (CC) mode, the converter 203 (e.g., the charger included in the converter 203) may control the current of the output power to maintain a preset value and adjust the voltage accordingly. Alternatively, when charging the battery 204 in the constant voltage (CV) mode, the converter 203 (e.g., the charger included in the converter 203) may control the voltage of the output power to maintain a preset value and adjust the current accordingly. Further, when providing power to the system (e.g., other systems of the wireless power reception device 103), the converter 203 (e.g., the charger included in the converter 203) may adjust and provide at least one of the voltage and current to a level suitable for the hardware. For example, when power is provided to the communication module 205 in the system, the converter 203 (e.g., the charger included in the converter 203) may adjust and provide power to a current and voltage suitable for the communication module 205. Meanwhile, when the converter 203 (e.g., the charger included in the converter 203) is implemented as a PMIC, the converter 203 (e.g., the charger included in the converter 203) may receive power from the battery 204 and transfer it to the system.

The wireless power reception device 103 (e.g., the controller 206) may perform communication with an external device (e.g., the wireless power transmission device 101) using the communication module 205. There is no limitation on the communication scheme provided by the communication module 205.

The wireless power reception device 103 (e.g., the controller 206) may perform a specific operation using an algorithm stored in the memory 207.

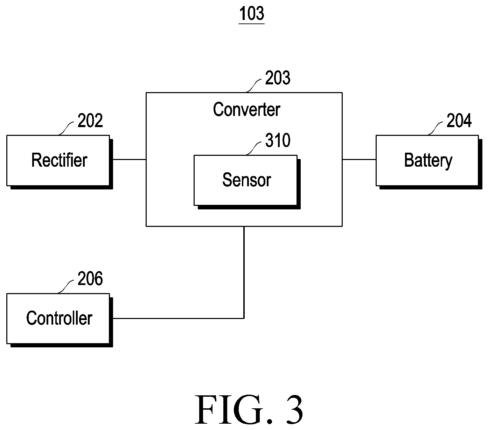

FIG. 3 is a block diagram illustrating a wireless power reception device according to an embodiment.

Referring to FIG. 3, a wireless power reception device 103 may include a rectifier 202, a converter 203, a battery 204, and a controller 206.

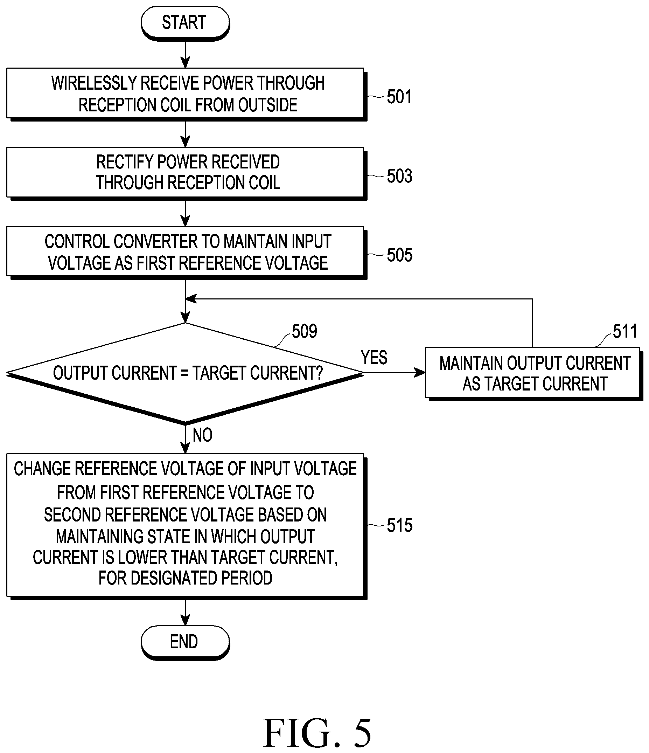

The converter 203 may include a sensor 310. The sensor 310 may include a voltage sensor and/or a current sensor. The converter 203 may identify the voltage and/or current using the sensor 310. The converter 203 may identify the input voltage (or input current) of the input power provided from the rectifier 202 to the converter 203, using the sensor 310. The converter 203 may identify the output current (or output voltage) of the output power (e.g., charging power) provided from the converter 203 to the battery 204, using the sensor 310. The converter 203 may control the input voltage of the input power based on the voltage (e.g., the input voltage of the input power) and/or the current (e.g., the output current of the output power) identified using the sensor 310. The converter 203 may transfer information about the voltage (e.g., the input voltage of input power) and/or the current (e.g., the output current of output power) identified using the sensor 310 to the controller 206. The converter 203 may receive a signal including information about the reference voltage from the controller 206. The reference voltage may be a voltage that is a reference of the input voltage of input power provided from the rectifier 202 to the converter 203. The reference voltage is described below with reference to FIG. 5.

The controller 206 may identify the voltage (e.g., the input voltage of the input power) and/or the current (e.g., the output current of the output power) based on information about the voltage (e.g., the input voltage of the input power) and/or the current (e.g., the output current of the output power) provided from the converter 203. The controller 206 may provide the signal including information about the reference voltage to the converter 203. For example, the controller 206 may provide the converter 203 with a signal including information about the reference voltage through serial communication or voltage level method.

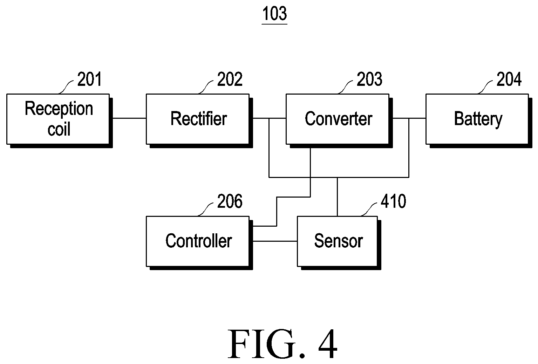

FIG. 4 is a block diagram illustrating a wireless power reception device according to an embodiment.

Referring to FIG. 4, a wireless power reception device 103 may include a rectifier 202, a converter 203, a battery 204, a sensor 410, and a controller 206.

The sensor 410 of FIG. 4 may have a component separate from the converter 203. The sensor 410 may include a voltage sensor and/or a current sensor. The controller 206 may identify the voltage and/or current using the sensor 410. The controller 206 may identify the input voltage (or input current) of the input power provided from the rectifier 202 to the converter 203, using the sensor 410. The controller 206 may identify the output current (or output voltage) of the output power (e.g., charging power) provided from the converter 203 to the battery 204, using the sensor 410.

The wireless power reception device 103 of FIG. 3 and the wireless power reception device 103 of FIG. 4 differ only in the implementation method of sensors (e.g., 310, 410), and the operation methods of FIGS. 5, 6, 7, and 8 may be applied to both the wireless power reception device 103 of FIG. 3 and the wireless power reception device 103 of FIG. 4.

FIG. 5 is a flowchart illustrating an operation method of a wireless power reception device according to an embodiment.

At least some of the operations of FIG. 5 may be omitted. The operation order of the operations of FIG. 5 may be changed. Operations other than the operations of FIG. 5 may be performed before, while, or after performing the operations of FIG. 5.

Referring to FIG. 5, in operation 501, the wireless power reception device 103 (e.g., the controller 206) may wirelessly receive power from the outside (e.g., the wireless power transmission device 101) through the reception coil 201.

In operation 503, the wireless power reception device 103 (e.g., the controller 206) may rectify the power received through the reception coil 201 using the rectifier 202. The rectifier 202 may rectify power received through the reception coil 201.

In operation 505, the wireless power reception device 103 (e.g., the controller 206) may control the converter 203 so that the input voltage provided from the rectifier 202 to the converter 203 is maintained as a reference voltage (e.g., a first reference voltage). The reference voltage may be a voltage that is a reference of the input voltage of input power provided from the rectifier 202 to the converter 203. The reference voltage may be larger than or equal to a designated chargeable voltage. The chargeable voltage may be a designated voltage that enables the battery 204 to be charged. When the input voltage provided from the rectifier 202 to the converter 203 is larger than or equal to the chargeable voltage, the battery 204 may be charged. For example, the wireless power reception device 103 (e.g., the controller 206) may provide a signal including information about the reference voltage (e.g., the first reference voltage) to the converter 203. The converter 203 may operate so that the input voltage provided from the rectifier 202 to the converter 203 is maintained as the reference voltage based on the signal provided from the controller 206. The on-off of at least one switch included in the converter 203 may be controlled so that the input voltage of the input power provided from the rectifier 202 to the converter 203 is maintained as the first reference voltage. The first reference voltage may be larger than or equal to the chargeable voltage. The wireless power reception device 103 may identify the input voltage of input power provided from the rectifier 202 to the converter 203. For example, referring to FIG. 3, the wireless power reception device 103 may identify the input voltage of the input power provided from the rectifier 202 to the converter 203 based on the information provided by the converter 203. For example, referring to FIG. 4, the wireless power reception device 103 may identify the input voltage of the input power provided from the rectifier 202 to the converter 203 using the sensor 410. The wireless power reception device 103 may control the converter 203 so that the input voltage of the input power provided from the rectifier 202 to the converter 203 is maintained as the first reference voltage based on the identified input voltage. Maintaining the input voltage as the reference voltage (e.g., the first reference voltage) may be maintaining the input voltage within a reference range (e.g., a first reference range) including the reference voltage (e.g., the first reference voltage). For example, when the reference voltage is 5 V, the reference range may be 4.8 V to 5.05 V.

In operation 509, the wireless power reception device 103 (e.g., the controller 206) may determine whether the output current provided from the converter 203 to the battery 204 has reached a target current. The "target current" may be a target value (e.g., a maximum set value) of a current provided from the converter 203 to the battery 204.

In operation 511, the wireless power reception device 103 (e.g., the controller 206) may maintain the output current as the target current based on the output current provided from the converter 203 to the battery 204 reaching the target current.

In operation 515, the wireless power reception device 103 (e.g., the controller 206) may change the reference voltage of the input voltage provided from the rectifier 202 to the converter 203 from the first reference voltage to a second reference voltage based on maintaining a state in which the output current provided from the converter 203 to the battery 204 is lower than the target current for a designated period. The second reference voltage may be lower than the first reference voltage. The second reference voltage may be higher than the designated chargeable voltage. The wireless power reception device 103 may change the reference voltage of the input voltage provided from the rectifier 202 to the converter 203 for impedance optimization. Impedance optimization may be to optimize the impedance of the wireless power reception device 103 so that the wireless charging efficiency of the wireless power reception device 103 is enhanced. According to an embodiment, the wireless power reception device 103 (e.g., the controller 206) may continue to perform operation 505 when the output current provided from the converter 203 to the battery 204 is lower than the target current, but the designated period of operation 515 does not elapse.

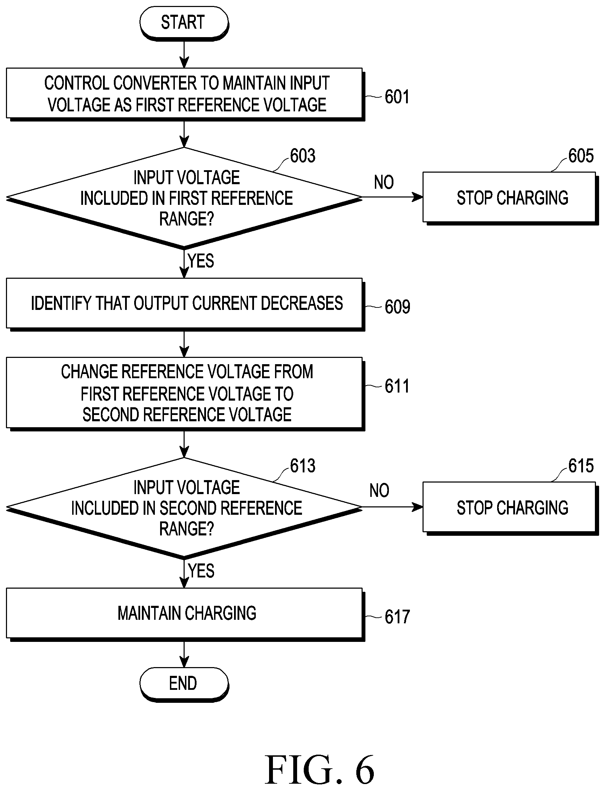

FIG. 6 is a flowchart illustrating an operation method of a wireless power reception device according to an embodiment.

At least some of the operations of FIG. 6 may be omitted. The operation order of the operations of FIG. 6 may be changed. Operations other than the operations of FIG. 6 may be performed before, while, or after performing the operations of FIG. 6. At least some of the operations of FIG. 6 may correspond to at least some of the operations of FIG. 5. The operations of FIG. 6 may be performed organically with the operations of FIG. 5.

Referring to FIG. 6, according to an embodiment, in operation 601, the wireless power reception device 103 (e.g., the controller 206) may control the converter 203 so that the input voltage provided from the rectifier 202 to the converter 203 is maintained as the first reference voltage. Operation 601 may be operation 505 of FIG. 5.

In operation 603, the wireless power reception device 103 (e.g., the controller 206) may identify whether the input voltage provided from the rectifier 202 to the converter 203 falls within the first reference range. The first reference range may be determined based on the first reference voltage. The reference range may be a range related to the input voltage provided from the rectifier 202 to the converter 203. The reference range may be a range including the reference voltage. For example, when the reference voltage is 5 V, the reference range may be 4.8 V to 5.05 V. The wireless power reception device 103 may identify that the input voltage is maintained as the first reference voltage based on the input voltage provided from the rectifier 202 to the converter 203 being included in the first reference range. The wireless power reception device 103 may identify whether the input voltage provided from the rectifier 202 to the converter 203 is included in the first reference range including the first reference voltage.

In operation 605, the wireless power reception device 103 (e.g., the controller 206) may stop charging the battery 204 of the wireless power reception device 103 based on the input voltage provided from the rectifier 202 to the converter 203 falling outside the first reference range of operation 603. The wireless power reception device 103 may control the converter 203 to stop charging the battery 204 based on the input voltage provided from the rectifier 202 to the converter 203 falling outside the first reference range. For example, the wireless power reception device 103 may stop charging the battery 204 of the wireless power reception device 103 based on the input voltage provided from the rectifier 202 to the converter 203 being decreased to smaller than the minimum value of the first reference range of operation 603.

In operation 609, the wireless power reception device 103 (e.g., the controller 206) may identify that the output current provided from the converter 203 to the battery 204 decreases. The wireless power reception device 103 may identify that the output current is decreased even though the input voltage provided from the rectifier 202 to the converter 203 is maintained as the first reference voltage of operation 601. For example, as an abnormal situation occurs while performing wireless charging, the power received by the wireless power reception device 103 may decrease. In this case, since the wireless power reception device 103 maintains the input voltage of the converter 203 as the reference voltage (e.g., the first reference voltage), the input current provided from the rectifier 202 to the converter 203 and/or the output current provided from the converter 203 to the battery 204 may be reduced. Accordingly, as the reception impedance (e.g., the ratio of the input voltage to the input current at the input power provided from the rectifier 202 to the converter 203) increases, the charging efficiency of wireless charging may be decreased. As the charging efficiency of wireless charging decreases, the power received by the wireless power reception device 103 further decreases, and as a result, wireless charging may be cut off. To prevent this, operation 611 may be performed.

In operation 611, the wireless power reception device 103 (e.g., the controller 206) may change the reference voltage of the input voltage provided from the rectifier 202 to the converter 203 from the first reference voltage to the second reference voltage based on the decrease in the output current provided from the converter 203 to the battery 204. The second reference voltage may be lower than the first reference voltage. The second reference voltage may be higher than the designated chargeable voltage. The chargeable voltage may be a designated voltage that enables the battery 204 to be charged. When the input voltage provided from the rectifier 202 to the converter 203 is larger than or equal to the chargeable voltage, the battery 204 may be charged.

In operation 613, the wireless power reception device 103 (e.g., the controller 206) may determine whether the input voltage provided from the rectifier 202 to the converter 203 falls within the second reference range. The second reference range may be determined based on the second reference voltage.

In operation 615, the wireless power reception device 103 (e.g., the controller 206) may stop charging the battery 204 of the wireless power reception device 103 based on the input voltage provided from the rectifier 202 to the converter 203 falling outside the second reference range of operation 613. The wireless power reception device 103 may control the converter 203 to stop charging the battery 204 based on the input voltage provided from the rectifier 202 to the converter 203 falling outside the second reference range. For example, the wireless power reception device 103 may stop charging the battery 204 of the wireless power reception device 103 based on the input voltage from rectifier 202 to the converter 203 being decreased to smaller than the minimum value of the second reference range of operation 613.

In operation 617, the wireless power reception device 103 (e.g., the controller 206) may maintain charging of the battery 204 based on the input voltage provided from rectifier 202 to converter 203 falling within the second reference range of operation 613. Based on the input voltage provided from the rectifier 202 to the converter 203, the wireless power reception device 103 may continuously charge the battery 204.

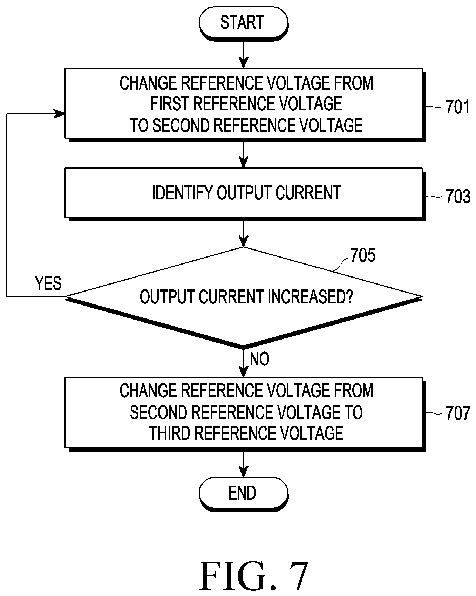

FIG. 7 is a flowchart illustrating an operation method of a wireless power reception device according to an embodiment.

At least some of the operations of FIG. 7 may be omitted. The operation order of the operations of FIG. 7 may be changed. Operations other than the operations of FIG. 7 may be performed before, while, or after performing the operations of FIG. 7. At least some of the operations of FIG. 7 may correspond to at least some of the operations of FIG. 5 or 6. The operations of FIG. 7 may be organically performed with the operations of FIG. 5 or 6.

Referring to FIG. 7, according to an embodiment, in operation 701, the wireless power reception device 103 (e.g., the controller 206) may change the reference voltage from the first reference voltage to the second reference voltage. Operation 701 may correspond to operation 611 of FIG. 6. The second reference voltage may be lower than the first reference voltage. The second reference voltage may be higher than the first reference voltage. The second reference voltage may be higher than the designated chargeable voltage. The converter 203 may operate so that the input voltage provided from the rectifier 202 to the converter 203 is maintained as the second reference voltage.

In operation 703, the wireless power reception device 103 (e.g., the controller 206) may identify the output current of the output power provided from the converter 203 to the battery 204. After changing the reference voltage from the first reference voltage to the second reference voltage, the wireless power reception device 103 may identify the output current of the output power provided from the converter 203 to the battery 204. For example, referring to FIG. 3, the wireless power reception device 103 may identify the output current of the output power provided from the converter 203 to the battery 204 based on the information provided from the converter 203. For example, referring to FIG. 4, the wireless power reception device 103 may identify the output current of the output power provided from the converter 203 to the battery 204 using the sensor 410.

In operation 705, after changing the reference voltage from the first reference voltage to the second reference voltage, the wireless power reception device 103 (e.g., the controller 206) may perform operation 701 based on an increase in the output current of the output power provided from the converter 203 to the battery 204. Performing operation 701 after performing operation 705 may be changing the reference voltage once again in a direction in which the reference voltage is changed in operation 701. For example, when the operation of decreasing the reference voltage is performed in operation 701, and then operation 701 is performed according to operation 705, the reference voltage may be decreased once again. For example, when the operation of increasing the reference voltage is performed in operation 701, and then operation 701 is performed according to operation 705, the reference voltage may be increased once again. After changing the reference voltage from the first reference voltage to the second reference voltage in operation 701, the wireless power reception device 103 may perform operation 707 based on an increase or decrease in the output current of the output power provided from the converter 203 to the battery 204.

In operation 707, the wireless power reception device 103 (e.g., the controller 206) may change the reference voltage from the second reference voltage to a third reference voltage. The wireless power reception device 103 may determine a third reference voltage according to an algorithm stored in the memory 207. After changing the reference voltage from the first reference voltage to the second reference voltage, the wireless power reception device 103 may determine the third reference voltage in a direction opposite to the direction of increasing/decreasing from the first reference voltage to the second reference voltage based on the output current of the output power provided from the converter 203 to the battery 204 not increasing or decreasing. For example, the wireless power reception device 103 may determine the third reference voltage as a value smaller than the second reference voltage based on the second reference voltage being larger than the first reference voltage. The wireless power reception device 103 may determine the third reference voltage as a value larger than the second reference voltage based on the second reference voltage being smaller than the first reference voltage.

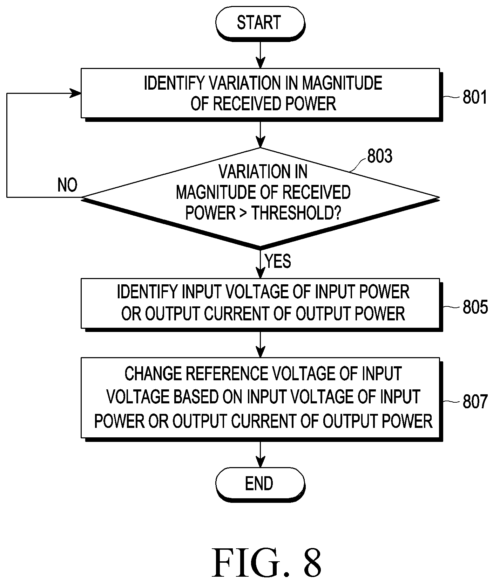

FIG. 8 is a flowchart illustrating an operation method of a wireless power reception device according to an embodiment.

At least some of the operations of FIG. 8 may be omitted. The operation order of the operations of FIG. 8 may be changed. Operations other than the operations of FIG. 8 may be performed before, while, or after performing the operations of FIG. 8. At least some of the operations of FIG. 8 may correspond to at least some of the operations of FIG. 5, 6, or 7. The operations of FIG. 8 may be organically performed with the operations of FIGS. 5, 6 or 7.

Referring to FIG. 8, according to an embodiment, in operation 801, the wireless power reception device 103 (e.g., the controller 206) may determine the variation in the magnitude of the received power (e.g., power received from the outside through the reception coil 201). For example, as the coupling coefficient between the wireless power reception device 103 and the wireless power transmission device 101 changes, the magnitude of the received power (e.g., power received from the outside through the reception coil 201) may change. For example, the wireless power reception device 103 (e.g., the controller 206) may identify the variation in the magnitude of the received power (e.g., the power received from the outside through the reception coil 201) in a state in which the reference voltage of the input voltage of the input power provided from the rectifier 202 to the converter 203 is maintained as the first reference voltage.

In operation 803, the wireless power reception device 103 (e.g., the controller 206) may perform operation 805 based on the variation in the received power (e.g., the power received from the outside through the reception coil 201) exceeding a threshold. The wireless power reception device 103 may perform operation 805 as the magnitude of the received power (e.g., the power received from the outside through the reception coil 201) changes beyond the threshold. For example, as charging of the wireless power reception device 103 begins, the variation in the magnitude of the received power (e.g., the power received from the outside through the reception coil 201) may exceed the threshold. As the reference voltage of the wireless power reception device 103 is changed, the variation in the magnitude of the received power (e.g., the power received from the outside through the reception coil 201) may exceed the threshold. As the magnitude of the power transmitted from the wireless power transmission device 101 is changed, the variation in the magnitude of the received power (e.g., the power received from the outside through the reception coil 201) may exceed the threshold. As the position of the wireless power reception device 103 being charged is changed, the variation in the magnitude of the received power (e.g., the power received from the outside through the reception coil 201) may exceed the threshold. As a new wireless power reception device is placed around the wireless power reception device 103 being charged, the variation in the magnitude of the received power (e.g., the power received from the outside through the reception coil 201) may exceed the threshold. As a foreign substance is placed around the wireless power reception device 103 being charged, the variation in the magnitude of the received power (e.g., the power received from the outside through the reception coil 201) may exceed the threshold.

In operation 805, the wireless power reception device 103 (e.g., the controller 206) may identify the input voltage of the input power provided from rectifier 202 to converter 203 or the output current of the output power provided from converter 203 to battery 204, based on the variation in the magnitude of the received power (e.g., the power received from outside through reception coil 201) exceeding the threshold. For example, referring to FIG. 3, the wireless power reception device 103 may identify the input voltage of the input power provided from the rectifier 202 to the converter 203 based on the information provided by the converter 203. The wireless power reception device 103 may identify the output current of the output power provided from the converter 203 to the battery 204 based on the information provided from the converter 203. For example, referring to FIG. 4, the wireless power reception device 103 may identify the input voltage of the input power provided from the rectifier 202 to the converter 203 using the sensor 410. The wireless power reception device 103 may identify the output current of the output power provided from the converter 203 to the battery 204 using the sensor 410.

In operation 807, the wireless power reception device 103 (e.g., the controller 206) may change the reference voltage of the input voltage provided from the rectifier 202 to the converter 203 based on the output current of the output power provided from the converter 203 to the battery 204 or the input voltage of the input power provided from the rectifier 202 to the converter 203. For example, the wireless power reception device 103 may change the reference voltage of the input voltage from the first reference voltage to the second reference voltage. Operation 807 may correspond to operation 701 of FIG. 7.

Those skilled in the art may understand that the embodiments described in the disclosure may be applied organically to each other within an applicable range. For example, those skilled in the art may understand that at least some operations of an embodiment described herein may be omitted, or that at least some operations of an embodiment and at least some operations of another embodiment may be organically connected.

According to an embodiment, a wireless power reception device 103 may comprise a reception coil 201, a rectifier 202, a converter 203, a battery 204, and a controller 206. The controller 206 may be configured to control the converter 203 to maintain an input voltage provided from the rectifier 202 to the converter 203 as a first reference voltage. The controller 206 may be configured to change a reference voltage of the input voltage from the first reference voltage to a second reference voltage based on maintaining a state in which an output current provided from the converter 203 to the battery 204 is lower than a designated target current for a designated period in a state in which the input voltage is maintained as the first reference voltage.

According to an embodiment, the controller 206 may be configured to maintain the output current as the target current based on the output current reaching the target current while the input voltage is maintained as the first reference voltage.

According to an embodiment, the controller 206 may be configured to change the reference voltage of the input voltage from the first reference voltage to the second reference voltage based on the output current being decreased from a first current lower than the target current to a second current lower than the first current before changing the reference voltage to the second reference voltage.

According to an embodiment, the second reference voltage may be lower than the first reference voltage.

According to an embodiment, the second reference voltage may be higher than a designated chargeable voltage.

According to an embodiment, the controller 206 may be configured to control the converter 203 to stop charging of the battery 204 based on the input voltage falling outside a first reference range including the first reference voltage.

According to an embodiment, the controller 206 may be configured to control the converter 203 to maintain charging of the battery 204 based on the input voltage being included in a second reference range including the second reference voltage.

According to an embodiment, the controller 206 may be configured to change the reference voltage from the second reference voltage to a third reference voltage based on the output current being not increased or being decreased after changing the reference voltage to the second reference voltage.

According to an embodiment, the controller 206 may be configured to identify the input voltage or the output current based on information provided from the converter

According to an embodiment, the controller 206 may be configured to change the reference voltage as a variation in a magnitude of power received from a wireless power transmission device 101 through the reception coil 201 exceeds a threshold.

According to an embodiment, a method for an operation of a wireless power reception device 103 may comprise wirelessly receiving power through a reception coil 201 of the wireless power reception device 103 from an outside. The method may comprise rectifying the power received through the reception coil 201 using a rectifier 202 of the wireless power reception device 103. The method may comprise controlling a converter 203 of the wireless power reception device 103to maintain an input voltage provided from the rectifier 202 to the converter 203 as a first reference voltage. The method may comprise changing a reference voltage of the input voltage from the first reference voltage to a second reference voltage based on maintaining a state in which an output current provided from the converter 203 to a battery 204 of the wireless power reception device 103 is lower than a designated target current for a designated period in a state in which the input voltage is maintained as the first reference voltage.

According to an embodiment, the method may comprise maintaining the output current as the target current based on the output current reaching the target current while the input voltage is maintained as the first reference voltage.

According to an embodiment, the method may comprise changing the reference voltage of the input voltage from the first reference voltage to the second reference voltage based on the output current being decreased from a first current lower than the target current to a second current lower than the first current before changing the reference voltage to the second reference voltage.

According to an embodiment, the second reference voltage may be lower than the first reference voltage.

According to an embodiment, the second reference voltage may be higher than a designated chargeable voltage.

According to an embodiment, the method may comprise stopping charging of the battery 204 based on the input voltage falling outside a first reference range including the first reference voltage.

According to an embodiment, the method may comprise maintaining charging of the battery 204 based on the input voltage being included in a second reference range including the second reference voltage.

According to an embodiment, the method may comprise changing the reference voltage from the second reference voltage to a third reference voltage based on the output current being not increased or being decreased after changing the reference voltage to the second reference voltage.

According to an embodiment, the method may comprise identifying the input voltage or the output current based on information provided from the converter.

According to an embodiment, the method may comprise changing the reference voltage as a variation in a magnitude of power received from a wireless power transmission device 101 through the reception coil 201 exceeds a threshold.

According to an embodiment, in a computer-readable recording medium storing instructions configured to perform at least one operation by a controller 206 of a wireless power reception device 103, the at least one operation may comprise wirelessly receiving power through a reception coil 201 of the wireless power reception device 103 from an outside. The at least one operation may comprise rectifying the power received through the reception coil 201 using a rectifier 202 of the wireless power reception device 103. The at least one operation may comprise controlling a converter 203 of the wireless power reception device 103 to maintain an input voltage provided from the rectifier 202 to the converter 203 as a first reference voltage. The at least one operation may comprise changing a reference voltage of the input voltage from the first reference voltage to a second reference voltage based on maintaining a state in which an output current provided from the converter 203 to a battery 204 of the wireless power reception device 103 is lower than a designated target current for a designated period in a state in which the input voltage is maintained as the first reference voltage.

According to an embodiment, the at least one operation may comprise maintaining the output current as the target current based on the output current reaching the target current while the input voltage is maintained as the first reference voltage.

According to an embodiment, the at least one operation may comprise changing the reference voltage of the input voltage from the first reference voltage to the second reference voltage based on the output current being decreased from a first current lower than the target current to a second current lower than the first current before changing the reference voltage to the second reference voltage.

According to an embodiment, the second reference voltage may be lower than the first reference voltage.

According to an embodiment, the second reference voltage may be higher than a designated chargeable voltage.

According to an embodiment, the at least one operation may comprise stopping charging of the battery 204 based on the input voltage falling outside a first reference range including the first reference voltage.

According to an embodiment, the at least one operation may comprise maintaining charging of the battery 204 based on the input voltage being included in a second reference range including the second reference voltage.

According to an embodiment, the at least one operation may comprise changing the reference voltage from the second reference voltage to a third reference voltage based on the output current being not increased or being decreased after changing the reference voltage to the second reference voltage.

According to an embodiment, the at least one operation may comprise identifying the input voltage or the output current based on information provided from the converter.

According to an embodiment, the at least one operation may comprise changing the reference voltage as a variation in a magnitude of power received from a wireless power transmission device 101 through the reception coil 201 exceeds a threshold.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element. According to embodiments, each component of the above-described components may include a single entity or multiple entities. Some of the plurality of entities may be separately disposed in different components. According to embodiments, one or more of the above-described components may be omitted, or one or more other components may be added. Alternatively or additionally, a plurality of components may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by components may be carried out sequentially, in parallel, repeatedly, or heuristically, or one or more of the operations may be executed in a different order or omitted, or one or more other operations may be added.

## Claims

1. A wireless power reception device (103), comprising:
a reception coil (201);
a rectifier (202);
a converter (203);
a battery (204); and
a controller (206), wherein the controller (206) is configured to:
control the converter (203) to maintain an input voltage provided from the rectifier (202) to the converter (203) as a first reference voltage; and
change a reference voltage of the input voltage from the first reference voltage to a second reference voltage based on maintaining a state in which an output current provided from the converter (203) to the battery (204) is lower than a designated target current for a designated period in a state in which the input voltage is maintained as the first reference voltage.

2. The wireless power reception device (103) of claim 1, wherein the controller (206) is configured to maintain the output current as the target current based on the output current reaching the target current while the input voltage is maintained as the first reference voltage.

3. The wireless power reception device (103) of claim 1 or 2, wherein the controller (206) is configured to change the reference voltage of the input voltage from the first reference voltage to the second reference voltage based on the output current being decreased from a first current lower than the target current to a second current lower than the first current before changing the reference voltage to the second reference voltage.

4. The wireless power reception device (103) of any one of claims 1 to 3, wherein the second reference voltage is lower than the first reference voltage.

5. The wireless power reception device (103) of any one of claims 1 to 4, wherein the second reference voltage is higher than a designated chargeable voltage.

6. The wireless power reception device (103) of any one of claims 1 to 5, wherein the controller (206) is configured to control the converter (203) to stop charging of the battery (204) based on the input voltage falling outside a first reference range including the first reference voltage.

7. The wireless power reception device (103) of any one of claims 1 to 6, wherein the controller (206) is configured to control the converter (203) to maintain charging of the battery (204) based on the input voltage being included in a second reference range including the second reference voltage.

8. The wireless power reception device (103) of any one of claims 1 to 7, wherein the controller (206) is configured to change the reference voltage from the second reference voltage to a third reference voltage based on the output current being not increased or being decreased after changing the reference voltage to the second reference voltage.

9. The wireless power reception device (103) of any one of claims 1 to 8, wherein the controller (206) is configured to identify the input voltage or the output current based on information provided from the converter (203).

10. The wireless power reception device (103) of any one of claims 1 to 9, wherein the controller (206) is configured to change the reference voltage as a variation in a magnitude of power received from a wireless power transmission device (101) through the reception coil (201) exceeds a threshold.

11. A method for an operation of a wireless power reception device (103), the method comprising:
wirelessly receiving power through a reception coil (201) of the wireless power reception device (103) from an outside;
rectifying the power received through the reception coil (201) using a rectifier (202) of the wireless power reception device (103);
controlling the converter (203) to maintain an input voltage provided from the rectifier (202) to a converter (203) of the wireless power reception device (103) as a first reference voltage; and
changing a reference voltage of the input voltage from the first reference voltage to a second reference voltage based on maintaining a state in which an output current provided from the converter (203) to a battery (204) of the wireless power reception device (103) is lower than a designated target current for a designated period in a state in which the input voltage is maintained as the first reference voltage.

12. The method of claim 11, further comprising maintaining the output current as the target current based on the output current reaching the target current while the input voltage is maintained as the first reference voltage.

13. The method of claim 11 or 12, further comprising changing the reference voltage of the input voltage from the first reference voltage to the second reference voltage based on the output current being decreased from a first current lower than the target current to a second current lower than the first current before changing the reference voltage to the second reference voltage.

14. The method of any one of claims 11 to 13, wherein the second reference voltage is lower than the first reference voltage.

15. The method of any one of claims 11 to 14, wherein the second reference voltage is higher than a designated chargeable voltage.
